# EUROPEAN PATENT APPLICATION

(11) **EP 4 403 285 A1**
(43) Date of publication of application: **24.07.2024**
(21) Application number: 24152307.5
(22) Date of filing: 17.01.2024
(51) Int. Cl.: B23B 45/00, B23Q 11/00, B25H 1/00, B28D 7/02, E04B 1/70

(54) **TRAY FOR WATER RECEPTION AND SYSTEM AND METHOD FOR DRAINING A HOLLOW CORE SLAB OF WATER**

(30) Priority: 19.01.2023 FI 20235054; 13.04.2023 FI 20235421
(71) Applicant: Finnpole Oy, 40620 Jyväskylä (FI)
(72) Inventor: KUUSISTO, Keni, 40620 JYVÄSKYLÄ (FI)
(74) Representative: Kespat Oy

(57) **Abstract**

The invention relates to a tray (20) for receiving and guiding water flowing from cavities (18) belonging to hollow-core slabs (12) in a controlled manner, wherein the tray (20) includes
- a base (22) and sides (24) that form a volume for the water to be received,
- a first opening (26) arranged in the base (22) for guiding the water out of the tray (20),
- a second opening (28) arranged in the base (22) for a drill bit (16) of a drill (14), and
- a collar (30) configured to surround the second opening (28), which collar (30) extends from the base (22) in the direction of drilling and is configured to prevent, at least for the most part, water from leaving the tray (20) via the second opening (28) when the drill bit (16) runs through the second opening (28),
- anti-rotation means (21) arranged eccentrically with respect to the second opening (28) for preventing a rotation of the tray (20),
wherein the tray (20) is configured to be supported at least in part on the drill bit (16) or the drill (14) or both during drilling.

The invention also relates to a system and to a method.

## Description

The invention relates to a tray for receiving and guiding water flowing from cavities belonging to hollow-core slabs in a controlled manner, wherein the tray includes
- a base and sides that form a volume for the water to be received,
- a first opening arranged in the base for guiding the water out of the tray,
- a second opening arranged in the base for a drill bit of a drill, and
- a collar configured to surround the second opening, which collar extends from the base in the direction of drilling and is configured to prevent, at least for the most part, water from leaving the tray via the second opening when the drill bit runs through the second opening.

The invention also relates to a system and to a method for draining water from a hollow-core slab.

Concrete hollow-core slabs are commonly used as load-bearing structures, for example in the floors of multi-storey buildings and the like. In a hollow-core slab, the concrete casting contains cavities that are open at both ends. During construction, the hollow-core slabs are generally exposed to weather conditions, such as rain, whereby water can get into the cavities. When the hollow-core slab is installed, the open ends of the cavities are blocked and the water is trapped inside the cavities. As the concrete is water-permeable, the water trapped in the cavities gradually permeates the concrete and can eventually reach the lower surface of the hollow-core slab after months or even years, which causes moisture damage to the surface structure covering the hollow-core slab. The cavities must therefore be drained of water in order to prevent problems. According to the generally used method, the draining of the cavities occurs by drilling a hole in the hollow-core slab from below with an impact drill, which punctures the cavity. This allows the water in the cavity to drain out of the cavity through the hole. A problem with this method, however, is that the cavity can contain tens of litres and as much as two hundred litres of water. This water gushes out and runs over the driller and the drilling device. Moreover, in cases where drilling is carried out in an already finished building, water flowing out of the cavities can cause damage when it spreads to the floors. In addition, there is also the problem that the concrete dust produced during drilling falls on the driller and the drill, which reduces the service life of the drill.

An object of the invention is to provide a tray, a system and a method which prevent water contained by the cavities from running over the driller and the drilling device in an uncontrolled manner and which enable a controlled guidance of the water onwards, for example for recovery. A further object is to prevent the spread of dust.

The characteristic features of the invention are set out in the attached claim 1 for the tray, in claim 11 for the system and in claim 15 for the method.

This object can be achieved with a tray for receiving and guiding water flowing from cavities belonging to hollow-core slabs in a controlled manner, wherein the tray includes a base and sides that form a volume for the water to be received, a first opening arranged in the base for guiding the water out of the tray, and a second opening arranged in the base for a drill bit of a drill. The tray further includes a collar configured to surround the second opening, which collar extends from the base in the direction of drilling and is configured to prevent, at least for the most part, water from leaving the tray via the second opening when the drill bit runs through the second opening, as well as anti-rotation means arranged eccentrically with respect to the second opening for preventing a rotation of the tray. The tray is configured to be supported at least in part on the drill bit or the drill or both during drilling.

The tray according to the invention allows the water that is removed by gravity through the hole drilled into the cavities to be received in a controlled manner and simultaneously prevents the water from running over the person operating the drill and over the drill. The tray also acts as a dust collector and prevents dust from spreading into the environment. The water can be drained from the tray, for example, via the first opening in a desired direction past the operator of the drill. The tray, which is preferably supported by gravity on the drill, is close to the hole so that at least the majority of the water falls into the tray. When the tray is supported at least in part by means of the drill bit, the anti-rotation means prevents the tray from rotating, so that the tray is firmly in place when the water flows into the tray. The collar of the tray provides torque support so as to hold the tray in a stable position.

According to a first embodiment, the first opening and the second opening are separate openings. The water can thus be effectively guided out of the tray through the first opening while the second opening acts as a passage for the drill bit. This type of tray structure is particularly suitable for use in finished apartments, in which water must not end up on the surfaces of the apartment.

Alternatively, the first opening and the second opening can be one and the same opening for the drill bit to pass through, via which at least some water drains. The water thereby collects for the most part in the tray and can be poured out of the tray in a controlled manner via the open top of the tray to a desired location. This type of tray structure is suitable for use in the stage of apartment construction, in which a little water on the floor is not a problem and the main concern is to protect the drill and the operator from dust and water. A hose is not used in this version, as it can get in the way of the driller and make it difficult to use the tray.

According to a first preferred embodiment, the anti-rotation means is a third opening belonging to the tray and arranged in the base for a trigger pole. A trigger pole running through the third opening acts as a torque support that prevents the tray from rotating together with the drill bit.

Alternatively, the anti-rotation means can be a coupling or some other contact surface for a torque support. The torque support can in turn be, for example, an object that can be supported on the drill or on the ground.

Preferably, a connection of the third opening includes a second collar, which second collar is configured to prevent, at least for the most part, water from leaving the tray via the third opening. The water falling into the tray is thus guided to the first opening and via the same in a controlled manner in a chosen direction.

A volume of the tray can be 1 - 10 litres, preferably 1.5 - 3 litres. This is a sufficient volume to receive an amount of water that can be rapidly released in connection with the piercing of a cavity.

A height of the tray can be 15 - 25 mm. A sufficiently high collar provides a sufficiently long support for the tray, which is supported on the drill bit running through the collar and the second opening. Moreover, a bushing can be arranged in the sufficiently high collar, which bushing supports the tray against the bit.

A height of the sides can be 30 - 60 mm. A sufficient volume is thereby formed in the tray in order to guide the water onwards in a controlled manner via the first opening.

A diameter of the first opening can be 15 - 30 mm, preferably 18 - 22 mm. This size is large enough to enable a rapid removal of the water from the tray via the first opening.

A diameter of the second opening can be 7 - 21 mm, preferably 12 - 16 mm. The second opening is thereby large enough to accommodate a standard drill bit. On the other hand, the drill bit and the second opening cannot be too large either, since it is necessary to hit the cavity in the hollow-core slab without hitting the structure between the cavities.

The diameter of the first opening is preferably significantly larger than the diameter of the second opening, so that water falling by gravity through the hole made by the drill bit, which preferably runs through the second opening, has time to drain via the first opening and cannot spill over the sides of the tray.

A diameter of the third opening can be 13 - 18 mm.

According to a preferred embodiment, the base of the tray is circular, a diameter of the tray is 15 - 25 cm, preferably 17 - 20 cm, and a height of the sides is 3 - 7 cm, preferably 4 - 6 cm. The circular shape and sufficiently small diameter allow the operator to see the drill bit past the tray, which makes it easier to align the drill bit with the pre-existing but obstructed openings in the hollow-core slab, which are opened first. If the size of the tray is too large, it will accordingly block the operator's view of the drill bit. Moreover, a circular tray effectively guides the water out of the tray through the first opening and water is not trapped in corners.

Preferably, the tray is 3D-printed from plastic. 3D printing is a cost-efficient and material-efficient way to form the tray. In addition, a tray made of plastic is lightweight, which makes drilling even easier, as the weight at the end of the drilling device is minimal.

According to one embodiment, the plastic can be a PLA plastic (polylactide plastic). This is particularly economical in terms of the cost of the raw material. Alternatively, if a greater strength of the tray is required, the plastic used can be an ABS plastic (acrylonitrile butadiene styrene), but this is more expensive than a PLA plastic in terms of its investment costs.

An infill percentage of the 3D print can be 5 - 30%, preferably 10 - 20%. This reduces the amount of material used in the print while the cavities left in the tray lighten the structure without significantly weakening it.

A wall thickness of the 3D print can be 0.8 - 4 mm, preferably 1 - 2 mm. The tray is thereby strong enough to withstand the pressure of the water.

Preferably, the tray includes a stainless-steel bushing surrounding the second opening in the plastic in order to improve wear resistance. The stainless-steel bushing prevents the drill bit from wearing down the material of the tray. This is particularly important when the tray is manufactured from plastic.

Preferably, the tray includes threads which skirt the first opening in the plastic and a brass hose connection arranged in the threads for a hose. It is difficult to form a hose connection in the tray as a 3D print without a good underpinning, which is why it is easier to form the hose connection in the tray as a separate insert that is attachable by threads. The employed threads can be so-called helicoil threads.

Alternatively, according to another embodiment, the tray can be manufactured from metal.

Preferably, the collar in the metal tray is made of plastic and is configured to be fixable to the base by means of a glue. This way, the fixation does not warp the base like welding.

Preferably, the collar in the metal tray includes a base plate through which the first opening and the second opening extend, threads arranged in connection with the second opening, and a hose collar arranged in the threads for attaching a hose to the base plate as an extension of the second opening in order to guide the water. The base plate helps to support the base of the tray while simultaneously functioning as a structure for the threads, which allow an easy attachment of the hose. An attachment that occurs by means of threads also does not require welding to the base, which could warp the base.

According to one embodiment, a third opening in the metal tray extends through the base plate while the tray further includes a threaded rod parallel to the plane of the base plate for fastening the base plate and thereby the tray to the trigger pole. The threaded rod allows the tray to be supported on the drill for all intents and purposes by means of the trigger pole. This reduces friction between the drill bit and the second opening of the tray, even though, when a hollow-core slab is drilled with a stone bit, the threads of the stone bit are not cutting and accordingly do not damage the tray, not even when they are in contact.

The base plate in the metal tray can include a groove for an adhesive mass for attaching the base plate to the base. It is ensured by means of the adhesive mass that water running through the first opening cannot get between the base plate. Moreover, the groove makes it possible to achieve a strong supporting adhesion of the base plate to the base.

The object of the system according to the invention is achieved with a system for draining water from a hollow-core slab, wherein the system includes a drill comprising a drill bit for piercing cavities belonging to the hollow-core slab in order to remove water from the cavities, and a tray according to any of the embodiments of the invention mentioned in the foregoing for receiving and guiding water draining from the cavities belonging to the hollow-core slabs in a controlled manner.

With the system according to the invention, the water that is removed from the cavities by gravity via the drilled hole can be received in a controlled manner in the tray while simultaneously avoiding that the water flows over the person operating the drill and over the drill. The tray allows the water to be collected and conducted past the operator of the drill. The tray, which is preferably supported by gravity on the drill, is close to the hole so that at least the majority of the water falls into the tray.

Preferably, the drill bit is essentially constant in terms of its diameter and continuous through the tray. The drill and the tray can thus be readily separated from each other and the drill can also be used for other applications on the construction site. The drill bit is also preferably a so-called "dry bit", which does not need to be cooled with water during use, like, for example, a casing bit or a diamond bit.

Preferably, the tray is configured to be removably supported on the drill bit or on the drill or both during drilling.

Preferably, the system includes a hose that is configured to be attachable so as to form an extension of the first opening of the tray in order to guide the water. The hose makes it possible to guide the water in a controlled manner, for example to drains or tubs, whereby it is possible to prevent, at least for the most part or entirely, that the water ends up on the floor.

Preferably, the drill includes a trigger pole for initiating drilling when the trigger pole is pressed and the tray further includes a third opening arranged in the base for the trigger pole. When a trigger pole is used, the trigger pole forms a support point for the tray that prevents the tray from rotating together with the rotating drill bit. The use of a trigger pole makes it easier to align the drill with a position, as the trigger pole forms a support point against the hollow-core slab before the drill bit comes into contact with the hollow-core slab.

Preferably, the system includes an extension pole for supporting the drill against the floor, wherein the extension pole includes a pedal that is attached in an articulated manner for pushing the drill by means of the extension pole towards the hollow-core slab. When an extension pole is used, drilling can be conveniently carried out while standing on the floor of the room without climbing a ladder. The extension pole allows the drill to be positioned reliably and the drill is pushed upwards by means of the pedal, which is tilted, which makes the work easier and facilitates the production of force. Moreover, when an extension pole is used, the weight of both the drill and the tray is supported directly on the floor, which makes the operator's job easier.

Preferably, the system further includes a spring arranged around the drill bit or the trigger pole for supporting the tray during drilling. The spring allows the weight of the tray to be supported on the drill or on the floor. The spring simultaneously makes it possible to push the drill closer to the hollow-core slab.

According to one embodiment, the drill bit is hollow and includes a suction channel parallel to the drill bit and a smooth outer jacket with a length of essentially the entire drill bit. In this type of drill bit, the water flowing into the tray from inside the hollow-core slab is guided through the suction channel to an outlet opening located at the other end of the drill bit, to which outlet opening a connection for a water-suction device can be attached for the recovery of the water. The water that is not quick to drain through the hollow drill bit ends up in the tray and flows via the same onwards to a desired final destination. The smooth, non-threaded jacket of the drill bit enables an efficient sealing of the drill bit to the second collar of the second opening of the tray, while water is not able to escape from the tray along the threads of the drill bit, as can occur when a conventional drill bit is used.

The tray can also be called a sink.

There can be a very small gap between the collars of the second opening and the drill bit via which it is possible for very small amounts of water to run along the drill bit out of the tray. However, this amount of water is remarkably small compared to the amount of water that runs through the first opening of the tray and is thus insignificant.

Alternatively, the inside of the collar can include a sealing bushing for preventing leaks.

According to an alternative embodiment, instead of a drill bit running through the second opening, the second opening can include bearings and chucks joined to the bearings for a drill that rotates the drill bit and the chuck. The chuck is thus rotated with an intermediate shaft by means of the drill, a separate bit being attached to the other end of the chuck. Such a solution completely prevents water from running through the second opening.

The object of the method according to the invention can be achieved with a method for draining water from a hollow-core slab by means of a system according to the invention, the method comprising drilling a hole into the hollow-core slab by means of a drill extending from below in order to pierce a cavity belonging to the hollow-core slab and to remove the water from the cavities, supporting a tray on the drill in order to receive the water, receiving the water draining from the cavity using the tray, and guiding the water out of the tray in a controlled manner.

The invention, which is not limited to the embodiments described in the following, is explained in more detail with reference to the attached figures, wherein
- Figure 1a: schematically shows a side view of a system according to the invention and simultaneously shows an initial condition of the method according to the invention,
- Figure 1b: schematically shows a side view of a system according to the invention and simultaneously shows a drilling condition of the method according to the invention,
- Figure 2: shows a side view of a tray of a system according to the invention in cross section,
- Figure 3: shows a tray of a system according to the invention from below,
- Figure 4a: shows an axonometric view of a tray according to a second embodiment on its own obliquely from above,
- Figure 4b: shows an axonometric view of the tray according to the second embodiment on its own obliquely from below,
- Figures 5a - 5c: show a tray according to a third embodiment on its own from different directions,
- Figure 6: shows a tray according to a fourth embodiment on its own from above,
- Figures 7a - 7c: show a manner of implementing a water cup from different angles.

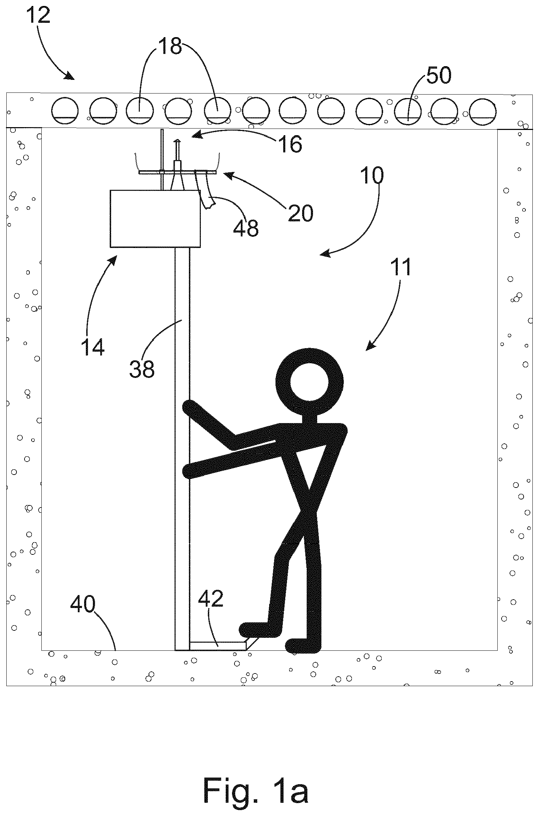

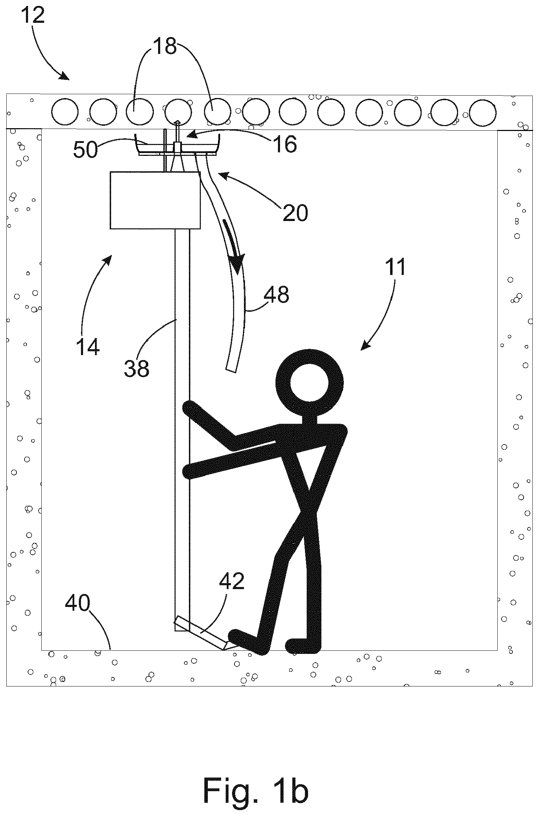

Figures 1a and 1b show a use of a system 10 according to the invention with a method according to the invention schematically. In Figure 1a, an operator has placed a drill 14 belonging to the system 10 in a state of drill-readiness below the hollow-core slab 12 so that the drill bit 16 is positioned under a single cavity 18 of the hollow-core slab 12. A tray 20, which belongs to the system 10 in addition to the drill 14, is supported on the drill 14 during drilling in order to receive the water that will run through the hole to be formed in the cavity 18. In the implementation shown in Figures 1a and 1b, the operator 11 is using an extension pole 38 in connection with the drill 14, which is supported at the end of the extension pole 38. The extension pole 38 allows the operator to carry out the drilling while standing on the floor while the weight of the drill 14 and the tray 20 is supported directly on the floor 40 by means of the extension pole 38. Connected to the lower end of the extension pole 38 in an articulated manner is a pedal 42, which, when pressed with a foot, allows the operator 11 to push the drill 14 against the hollow-core slab 12 during drilling as shown in Figure 1b. The extension pole can be, for example, the MT PJT extension pole manufactured by the Finnish company MT tools for impact drills or the corresponding extension pole manufactured by the US company Doc's Industries, Inc.

As an alternative to using an extension pole, drilling can also be carried out from a ladder with a hand drill that does not have a trigger pole. In this case, the tray does not include a third opening.

For the drilling, an impact drill is preferably used as the drill 14 and a stone bit or concrete bit is preferably used as the drill bit 16, which makes it possible to form a hole in the concrete hollow-core slab 12 between the outer surface and the cavity 18. A length of a hole can generally be 30 - 50 mm in hollow-core slabs in multi-storey buildings. When the hole is opened, a channel is formed along which the water 50 in the cavity can drain by gravity from the cavity 18 to the tray 20 located below the hole and from there onwards in a controlled manner preferably along a hose 48 as shown in Figure 1b, for example to a drain or bucket. The employed hose is preferably flexible, so that it can be guided in a desired direction. Alternatively, the water is collected in the tray and poured out of the tray, for example into a drain or bucket.

Preferably, when an extension pole 38 is used, the drill 14 is equipped with a trigger pole 32, the purpose of which is to operate the trigger of the drill 14 in order to initiate and interrupt the rotation of the drill bit 16. The trigger pole 32 is an element that is movable in the longitudinal direction of the drill bit 16 and that extends beyond the drill bit 16 when the drill 14 is at a standstill, while when the drill 14 is pressed against the hollow-core slab 12, the trigger pole 32 comes to a halt at the lower surface of the hollow-core slab 12 and presses the trigger down in the forward-moving drill 14, thereby initiating the rotation of the drill bit 16 of the drill 14.

According to one embodiment, the drill bit used in the drill is hollow and comprises a suction channel that runs in the longitudinal direction of the bit through its centre, along which the water can run down through the bit to, for example, a connection for a suction device attached to the drill bit. This type of bit has no threads at all on the jacket part of the bit, but rather the outer surface at the jacket is smooth. The drill bit can thus be effectively sealed against the second collar, which prevents water from escaping from the tray along the threads of the bit. The employed hollow drill bit can be, for example, Hilti's TE-CD (SDS PLUS) carbide bit.

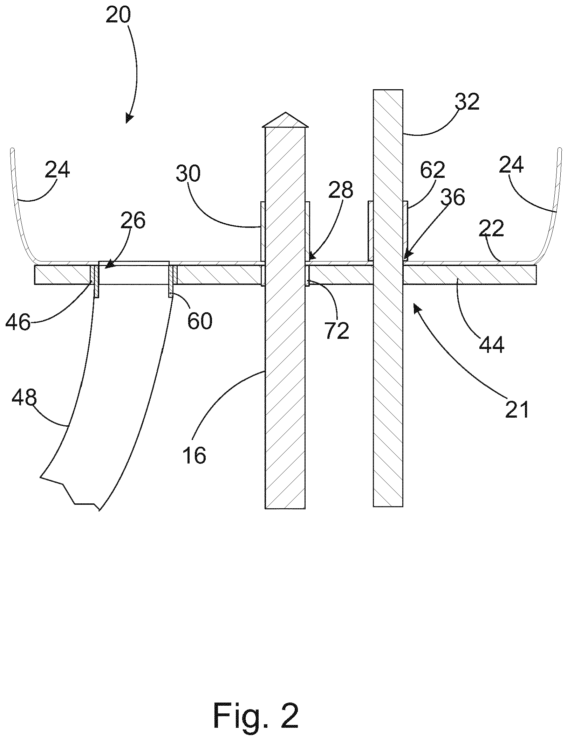

Figure 2 shows the structure of a tray 20 in more detail in cross section. Figure 2 also shows a hose 48 attached to the tray 20 in addition to a drill bit 16 and a trigger pole 32. The tray 20 can be a structure made of stainless steel or acid-resistant steel which includes a base 22 and sides 24 that lie preferably practically perpendicular to the base 22 and that skirt the base 22, thereby forming a sink-shaped volume. The tray can be made, for example, by laser-cutting the necessary openings in a steel plate and pressing said plate into the shape of a tray. A thickness of the steel plate can be 1 - 5 mm. Instead of steel, the tray can also be made of, for example, plastic or glass fibre, keeping in mind that it may be necessary in this case to reinforce the structure of the tray by means of ribs or analogous reinforcements. Most preferably, the tray is made of plastic, whereby it is lightweight and easy to manufacture, for example as a 3D print.

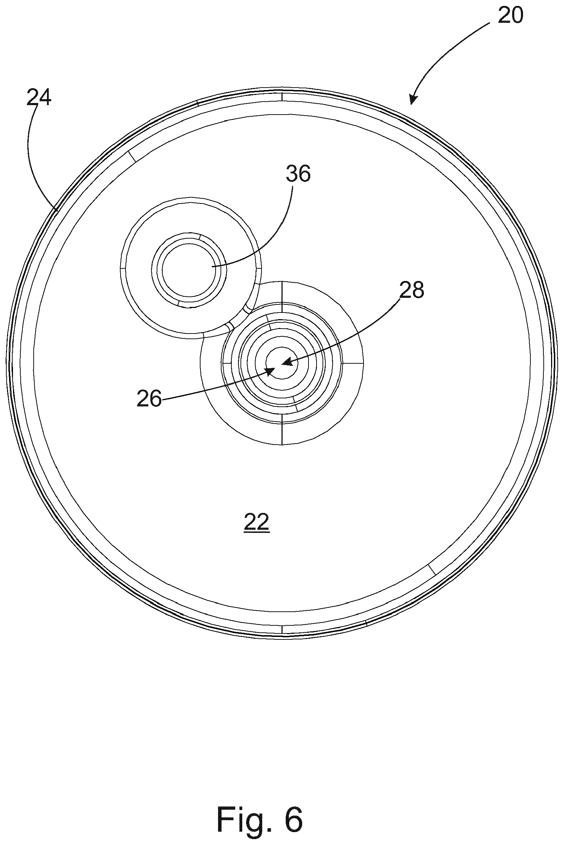

Preferably, the base 22 of the tray 20 includes a first opening 26 so that the water can be conducted out of the tray 20 and onwards in a controlled manner. A hose 48 can be connected to the first opening 26. The underside of the base 22 preferably includes a base plate 44, which can be made of, for example, plastic. The base plate 44 is preferably glued to the base 22 while it is also possible to additionally use screws for the attachment. The tray 20 also includes a second opening 28 for a drill bit 16. In a fourth alternative embodiment shown in Figure 6, the first opening 26 and the second opening 28 are one and the same opening through which the drill bit is conducted. In the embodiment shown in Figure 2, the drill bit 16 runs through the second opening 28 as a unitary structure. Alternatively, a bearing connection and chucks can be arranged in the second opening, wherein a rotation shaft of the drill is attached to the lower chuck and the drill bit that is to be used is attached to the upper chuck. In the embodiment of Figure 2, the second opening 28 is rimmed by a collar 30 which extends upwards from the base 22 and which prevents water on the base 22 of the tray 20 from flowing out of the second opening 28.

In cases where the tray is made of metal, the collar 30 can be a separate piece, for example a plastic collar that is glued to the base 22 in order to avoid welding and simultaneously seal the collar. In a tray made of plastic, the collar is preferably an integrated part of the structure. Preferably, the tray 20 includes a steel bushing 72, which is preferably arranged in the second opening 28 at the site of the collar in the second opening 28, as shown in Figure 2. The purpose of the steel bushing 72 is to protect the plastic structure of the second opening 28 from wear caused by the rotating drill bit 16.

Small amounts of water can run through the second opening 28 to the outside of the tray 20 along the threads of the drill bit or between the second opening 28 and the drill bit 16. Preferably, the second opening 28 continues through the base plate 44. In cases where the first opening and the second opening are one and the same opening, water is drained from the tray for the most part by tipping the tray over to one side in a controlled manner.

For the attachment of the hose 48, the base plate 44 can include threads 46 to which a hose collar 60 is preferably attached by rotation. The hose collar is preferably a separate part from the base, so that the base does not need to be welded, which could warp the base. The hose 48 is preferably arranged over the second collar 60 and fastened with a tightening clamp. The system according to the invention can also be implemented without a hose; in this case, however, the water falls directly onto the floor but clears the operator, so that the operator and the drill do not get wet. Alternatively, the water can also be poured out over a side of the tray.

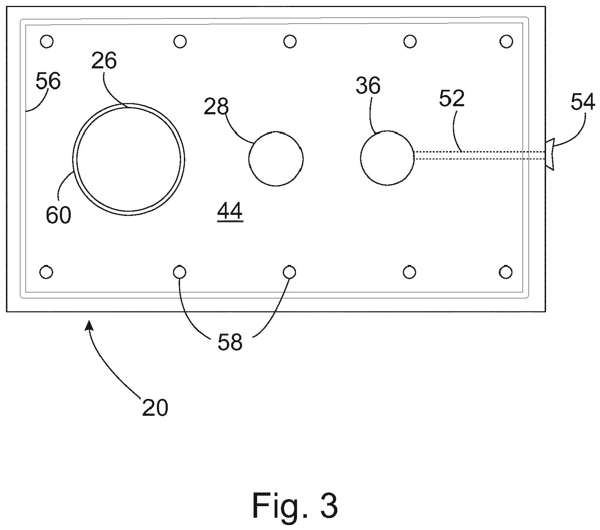

Just as the collar 30 surrounds the first opening 26, preferably the third opening 36 is also surrounded by a second collar 62 that prevents water from flowing out of the tray 20 through the third opening 36. As shown in Figure 3, a threaded rod 52 is configured to extend so as to connect with the third opening and is arranged parallel to the plane of the base plate 44. The threaded rod 52 can be moved by means of a wing nut 54 so as to move perpendicularly to the trigger pole, thereby fastening the tray 20 to the trigger pole.

Figure 3 also shows a groove 56 that is preferably formed in the base plate 44 and that runs around the same, into which an adhesive mass is squeezed before the base plate 44 is glued to the base. In addition to the glue, the base plate 44 can be attached by means of screw or bolt fasteners through the openings 58.

Since the tray 20 is supported at least in part against the drill bit 16 when the latter runs through the second opening 28 of the tray 20, the rotating drill bit 16, when in contact with the tray 20, causes a force and torque that rotates the tray 20 in the direction of the drill bit. To this end, the tray 20 includes anti-rotation means 21 arranged eccentrically with respect to the second opening 28, which in the embodiment shown in Figure 2 is a third opening 36 through which a trigger pole 32 is arranged. By means of the anti-rotation means 21, the tray 20 is supported on a fixed object, in this case on the extension pole and the floor by way of the trigger pole 32, which prevents the tray 20 from rotating together with the drill bit 16. This is important in order to ensure that the temporarily supported tray can support a load and that the water that it is to receive does not end up sloshing out of the tray as it rotates. Alternatively, the anti-rotation means can be, for example, a mating part formed in the base of the tray, in which a torque support or the like that can be supported, for example, on the drill or on the floor is eccentrically arranged in order to prevent a rotation of the tray.

Preferably, the tray only weighs 1 - 2 kg so that it can be easily supported by means of the extension rod and the drill.

The base of the tray can be inclined towards the first opening in order to facilitate the movement of the water. In the solution shown in Figures 1a - 4b, the water moves to the first opening in the tray as the water level rises up the sides of the tray.

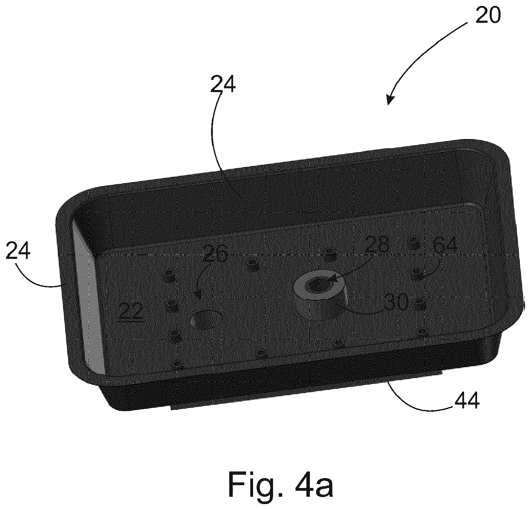

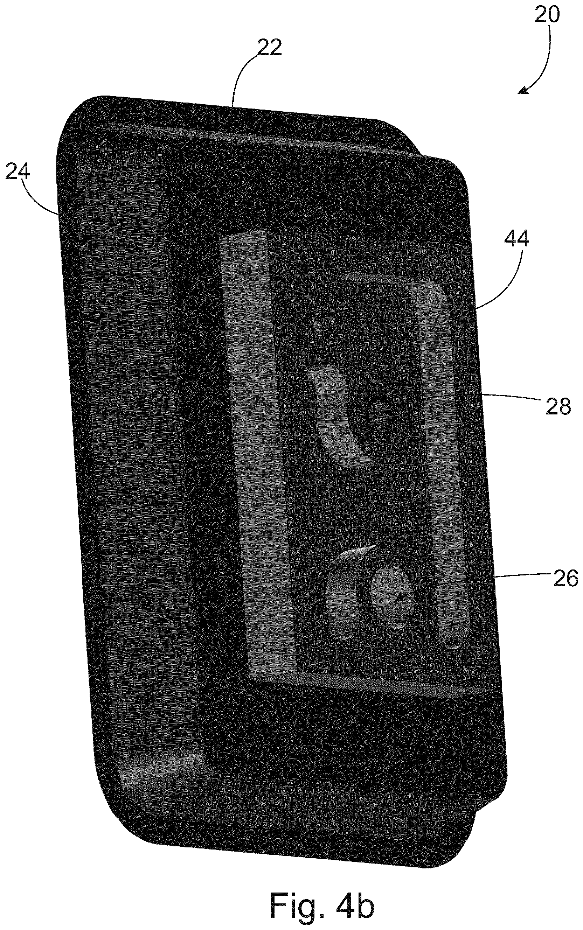

Figures 4a and 4b show a second embodiment of the tray. In these figures, the reference number 64 indicates the ends of the bolts used for the attachment of the base plate 44.

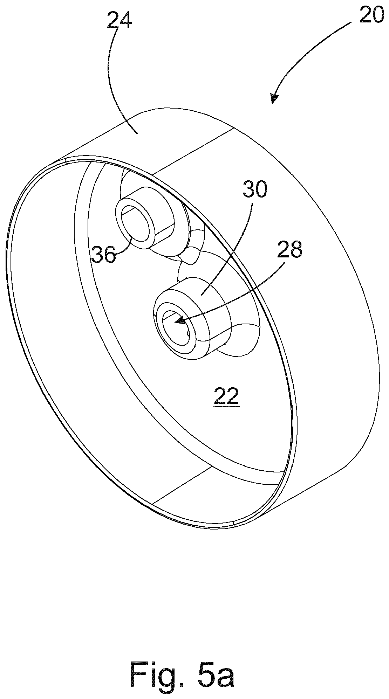

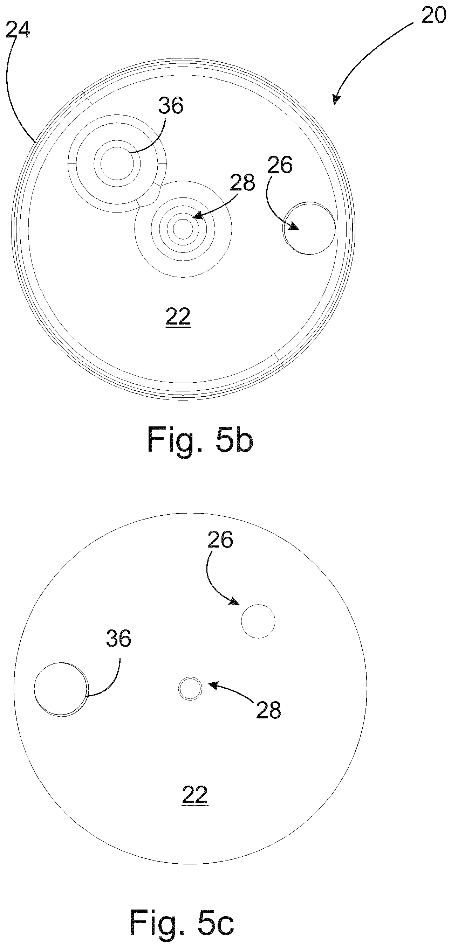

Figures 5a - 5c show an advantageous third embodiment of the tray 20 according to the invention in which the base 22 of the tray 20 is circular.

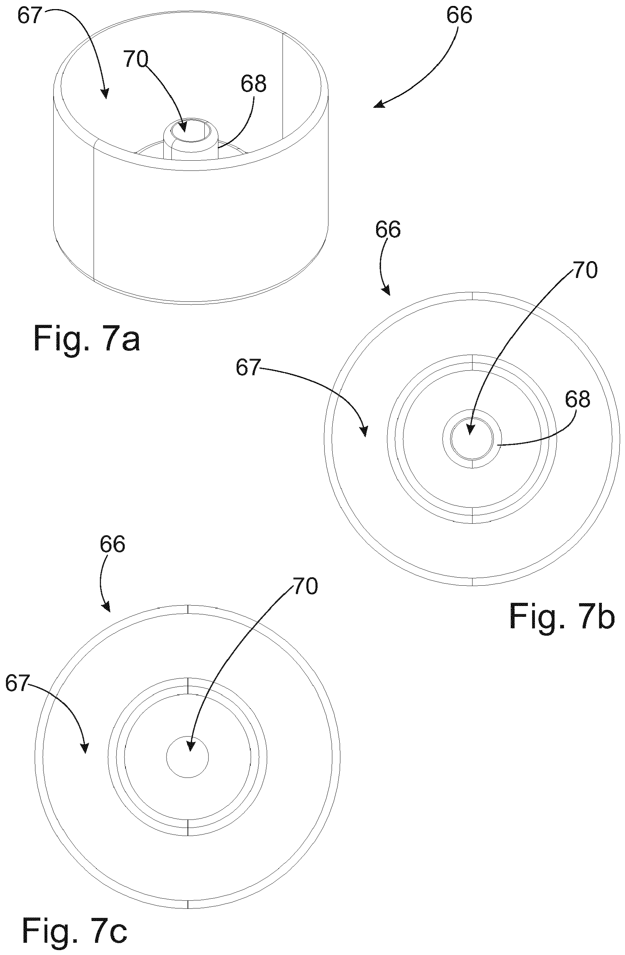

According to one embodiment, a separate water cup 66, which is shown in Figures 7a - 7c, can be arranged underneath the tray around the drill bit in a position of use of the system. The purpose of the water cup is to receive water leaking from between the second opening and the drill bit and to prevent it from ending up on the drill. The water cup 66 includes a cup-like structure 67, a bit opening 70 formed at its centre and a steel collar 68 surrounding the bit opening 70. In cases where the system does not use an extension pole to support the drill on the floor, the tray can be supported on the water cup by means of a spring.

In a solution not comprised by the invention, it is conceivable that an operator can be protected from the water draining from the cavities when the system includes, in addition to the drill, any kind of protection that can be attached to the drill, such as an umbrella-like solution with a hole for the drill bit, instead of the tray. Such a solution also prevents the operator and the drill from getting wet, but does not enable a controlled recovery of the water.

## Claims

1. A tray (20) for receiving and guiding water flowing from cavities (18) belonging to hollow-core slabs (12) in a controlled manner, wherein the tray (20) includes
- a base (22) and sides (24) that form a volume for the water to be received,
- a first opening (26) arranged in the base (22) for guiding the water out of the tray (20),
- a second opening (28) arranged in the base (22) for a drill bit (16) of a drill (14), and
- a collar (30) configured to surround the second opening (28), which collar (30) extends from the base (22) in the direction of drilling and is configured to prevent, at least for the most part, water from leaving the tray (20) via the second opening (28) when the drill bit (16) runs through the second opening (28), **characterized in that** the tray (20) further includes anti-rotation means (21) arranged eccentrically with respect to the second opening (28) for preventing a rotation of the tray (20), wherein the tray (20) is configured to be supported at least in part on the drill bit (16) or the drill (14) or both during drilling.

2. The tray according to claim 1, **characterized in that** the first opening (26) and the second opening (28) are separate openings.

3. The tray according to claim 1 or 2, **characterized in that** the anti-rotation means (21) is a third opening (36) belonging to the tray (20) and arranged in the base (22) for a trigger pole (32).

4. The tray according to claim 3, **characterized in that** a second collar (62) is included in connection with the third opening (36), which second collar (62) is configured to prevent, at least for the most part, water from leaving the tray (20) via the third opening (36).

5. The tray according to any of claims 1 - 4, **characterized in that** a diameter of the second opening (28) is 7 - 21 millimetres, preferably 12 - 16 millimetres.

6. The tray according to any of claims 1 - 5, **characterized in that** a volume of the tray (20) is 1 - 10 litres, preferably 1.5 - 3 litres.

7. The tray according to any of claims 1 - 6, **characterized in that** the base (22) is circular and a diameter of the tray (20) is 15 - 25 cm, preferably 17 - 20 cm, and a height of the sides (24) is 3 - 7, preferably 4 - 6 cm.

8. The tray according to any of claims 1 - 7, **characterized in that** the tray (20) is 3D-printed or cast from plastic.

9. The tray according to claim 8, **characterized in that** an infill percentage of a 3D print of the 3D-printed tray (20) is 5 - 30%, preferably 10 - 20%.

10. The tray according to claim 8 or 9, **characterized in that** the tray (20) includes a stainless-steel bushing (72) surrounding the second opening (28) in the plastic in order to improve wear resistance.

11. A system (10) for draining water from a hollow-core slab (12), wherein the system (10) includes a drill (14) comprising a drill bit (16) for piercing cavities (18) belonging to the hollow-core slab (12) in order to remove water from the cavities (18), and a tray (20) for receiving and guiding water draining from the cavities (18) belonging to the hollow-core slabs (12) in a controlled manner, **characterized in that** the tray (20) is a tray (20) according to any of claims 1 - 10.

12. The system according to claim 11, **characterized in that** the drill (14) includes a trigger pole (32) for initiating drilling when the trigger pole (32) is pressed and the tray (20) further includes a third opening (36) arranged in the base (22) for the trigger pole (32).

13. The system according to claim 11 or 12, **characterized in that** the system (10) includes an extension pole (38) for supporting the drill (14) against the floor (40), wherein the extension pole (38) includes a pedal (42) that is attached in an articulated manner for pushing the drill (14) by means of the extension pole (38) towards the hollow-core slab (12).

14. The system according to claim 13, **characterized in that** the system (10) further includes a spring arranged around the drill bit (16) or the trigger pole (32) for supporting the tray (20) during drilling.

15. A method for draining water from a hollow-core slab (12) by means of a system (10), the method comprising drilling a hole in the hollow-core slab (12) by means of a drill (14) extending from below in order to pierce a cavity (18) belonging to the hollow-core slab (12) and to remove the water from the cavities (18), **characterized in that** the system (10) is a system (10) according to any of claims 1 - 14 and **in that** the method further comprises
- supporting a tray (20) belonging to the system (10) temporarily on the drill (14) in order to receive the water by arranging a drill bit (16) of the drill (14) through a second opening (28) belonging to the tray (20),
- receiving the water draining from the cavity (18) using the tray (20), and
- guiding the water out of the tray (20) in a controlled manner.
